# FASCICULE DE BREVET EUROPEEN

(11) **EP 2 284 078 B1**
(45) Date de publication et mention de la délivrance du brevet: **07.01.2015**
(21) Numéro de dépôt: 10190556.0
(22) Date de dépôt: 20.03.2008
(51) Int. Cl.: B64C 13/28, F16H 25/20, G01H 11/08

(54) **Perfectionnements à la détection d'effort sur un actionneur de commande de vol**
Perfektionierungen der Erfassung des Drucks auf ein Stellglied zur Flugsteuerung
Improved load detection on a flight control actuator

(30) Priorité: 23.03.2007 FR 0754003
(43) Date de publication de la demande: 16.02.2011
(62) Demande divisionnaire de: 08165087.1
(73) Titulaire: Goodrich Actuation Systems SAS, 78530 Buc (FR)
(72) Inventeur: Moalic, Jean-Marc, 95210, SAINT GRATIEN (FR); Turpin, Pierre, 78310, Maurepas (FR); Sellier, Philippe, 27150, Etrepagny (FR)
(74) Mandataire: Leckey, David Herbert

(56) Documents cités:
- FR-A1- 2 858 035
- US-A- 3 695 096
- US-A- 6 006 163
- US-A1- 2003 000 314

## Description

### DOMAINE TECHNIQUE GENERAL ET ART ANTERIEUR

La présente invention est relative à la détection d'effort sur un actionneur de commande de vol.

Notamment, mais non limitativement, elle concerne la détection de la reprise d'effort par une voie secondaire d'un actionneur de commande de vol d'aéronef et trouve notamment avantageusement application dans le cas d'actionneur de type THSA (« Trimmable Horizontal Stabilizer Actuator »).

On sait que classiquement, de tels actionneurs comportent deux voies mécaniques, l'une primaire, l'autre secondaire, cette dernière étant destinée à reprendre l'effort lorsque la voie primaire est défaillante.

En fonctionnement sur la voie primaire, les efforts transitent par une vis à billes ou à rouleaux creuse. Cette caractéristique permet d'y loger une tige de sécurité (barre dite « fail safe »), rainurée à ses extrémités et reliée avec jeu à la vis. Cette structure assure la continuité de la transmission des efforts et de la rotation de l'ensemble (en évitant une séparation axiale des éléments de la vis, en cas de rupture de la vis elle-même). La vis se termine à une de ses extrémités par une pièce d'attache par laquelle elle est reliée à l'aéronef (attache haute primaire). En cas de défaillance de celle-ci, les efforts sont repris par la tige de sécurité dont l'extrémité est une forme mâle (par exemple une sphère) disposée dans une forme femelle d'une pièce d'attache de la voie secondaire (attache haute secondaire). Cette attache secondaire est elle-même reliée à l'aéronef au moyen d'une pièce d'attache avion différente de celle utilisée pour supporter la voie primaire.

En fonctionnement « normal », lorsque la voie primaire porte l'effort, il existe un jeu entre la forme mâle qui termine la tige de sécurité et la forme femelle de la pièce d'attache de la voie secondaire, de sorte que la pièce d'attache secondaire avion ne supporte pas d'autre effort que le poids de la pièce d'attache femelle secondaire du THSA.

Lors de la défaillance de la voie primaire, la forme mâle qui termine la vis vient en contact avec la forme femelle de la pièce d'attache de la voie secondaire ce qui entraine la reprise d'effort par la chape de fixation secondaire avion.

On connait déjà, par exemple par FR 2.858.035 ou EP 1.557.588, des dispositifs pour la détection de la reprise d'effort par une voie secondaire.

Toutefois, les solutions proposées à ce jour sont généralement fondées sur une détection du déplacement ou de l'écartement entre différentes pièces.

On souhaite pouvoir proposer des solutions qui permettent d'encore améliorer la fiabilité des détections des mises sous charge des voies secondaires.

On souhaite également pouvoir proposer des solutions d'intégration moins complexe que les solutions précitées à capteurs de détection de déplacement ou d'écartement.

### PRESENTATION DE L'INVENTION

Un but de l'invention est donc de proposer une solution pour détecter la reprise d'effort, afin notamment d'informer le pilote de ce que la voie secondaire a pris le relais de la voie primaire.

Un autre but de l'invention est en particulier de résoudre cette problématique de détection d'une façon simple et efficace.

Un autre but encore de l'invention est de proposer une solution permettant d'éviter toute détection intempestive, et ce alors même que l'actionneur doit pouvoir être soumis à des environnements extérieurs sévères, notamment mécaniques, chimiques, climatiques ou électriques.

Un autre but encore de l'invention est de proposer une solution particulièrement simple en terme d'intégration.

Plus particulièrement, l'invention propose un ensemble de détection dans un aéronef comprenant un actionneur de commande de vol présentant une voie primaire et une voie secondaire apte à reprendre l'effort de la voie primaire en cas de défaillance de celle-ci, la voie primaire comportant une vis, la voie secondaire comportant une tige de sécurité de reprise d'effort traversant la vis, une pièce d'attache de la voie primaire terminant la vis de celle-ci, une pièce d'attache de la voie secondaire dont une forme femelle reçoit, avec jeu lorsque la voie primaire porte l'effort, une forme mâle qui termine la tige de sécurité de reprise d'effort, la forme mâle qui termine la tige et la forme femelle de la pièce d'attache de la voie secondaire étant sphériques ou de révolution, une chape de fixation de l'aéronef appartenant à la structure de l'aéronef, des moyens de fixation de la pièce d'attache de la voie secondaire à ladite chape de fixation,la pièce d'attache de la voie secondaire, la chape de fixation et les moyens de fixation réalisant l'attache haute de la voie secondaire, des moyens de détection de mise sous charge de la voie secondaire de l'actionneur de commande de vol lors d'une rupture de la voie primaire, ledit ensemble étant caractérisé en ce que lesdits moyens de détection de mise sous charge de la voie secondaire de l'actionneur de commande de vol comprennent des moyens pour exciter en vibration au moins une pièce de l'attache haute de la voie secondaire, des moyens pour relever les vibrations ainsi générées sur cette pièce et des moyens de traitement pour détecter un changement de la réponse en fréquence de la pièce excitée.

Ainsi, on détecte les contraintes sur les pièces assurant l'attache haute de la voie secondaire pour mettre en évidence une reprise d'effort par la voie secondaire.

Une telle solution a l'avantage d'être fiable et peu compliquée à implémenter.

Par ailleurs, dans un mode de réalisation qui ne se veut pas limitatif, un capteur apte à détecter un effort est disposé sur au moins une vis de fixation assurant l'attache haute de la voie secondaire et/ou sur une bague rapportée sur celle-ci. On notera qu'un avantage important de cette solution est qu'elle s'intègre aisément sur des équipements existants, sans nécessiter de modifications substantielles sur ceux-ci (il suffit pour l'essentiel de changer la vis ou l'ensemble vis/bague) et en particulier sans modification des chapes de fixation de l'avion et de l'actionneur.

Un dispositif de type boite à ressort pourra être ajouté sur la vis de manière à rendre indépendant la mise sous charge des membranes de l'effort couple de serrage appliqué à la vis lors du montage.

Sur un ensemble comportant deux vis équipées on pourra au moyen d'un boitier électronique traiter l'un ou les deux signaux de manière quantitative ainsi que relative cela pour fiabiliser la pertinence de la mesure.

L'invention concerne également l'utilisation d'au moins une vis de fixation qui comporte des moyens pour exciter en vibration ladite vis, des moyens pour relever les vibrations ainsi générées sur ladite vis, l'actionneur comprenant des moyens de traitement pour détecter un changement de la réponse en fréquence de la vis, ladite vis étant substituée à une vis de fixation d'une pièce d'attache de la voie secondaire de l'actionneur de commande de vol.

### PRESENTATION DES FIGURES

D'autres caractéristiques et avantages de l'invention ressortiront encore de la description qui suit, laquelle est purement illustrative et non limitative, et doit être lue en regard des dessins annexés sur lesquels :
- la figure 1 est une représentation schématique illustrant le principe d'un actionneur ;
- les figures 2a à 2c sont des représentations schématiques en vue de côté et en coupe illustrant la fixation de l'attache haute de la voie secondaire ;
- les figures 3a et 3b illustrent des moyens de détection disposés au niveau des pièces participant à l'attache haute telle qu'illustrées sur les figures 2a à 2c ;
- les figures 4a et 4b sont des représentations schématiques en coupe d'autres moyens de détection d'effort ;
- la figure 5 est une représentation schématique en perspective des moyens de détection des figures 4a et 4b ;
- la figure 6 est une représentation schématique en coupe illustrant un mode de réalisation de moyens de détection d'effort selon l'invention ;
- la figure 7 illustre un autre détail de l'attache haute ;
- la figure 8 illustre également des moyens de détection d'effort ;
- la figure 9, enfin, représente schématiquement un montage d'alimentation électrique et de traitement auquel sont reliés les capteurs associés à deux vis équipées du type de celles décrites en référence aux figures précédentes.

### DESCRIPTION DES FIGURES

### STRUCTURE GENERALE DE L'ACTIONNEUR

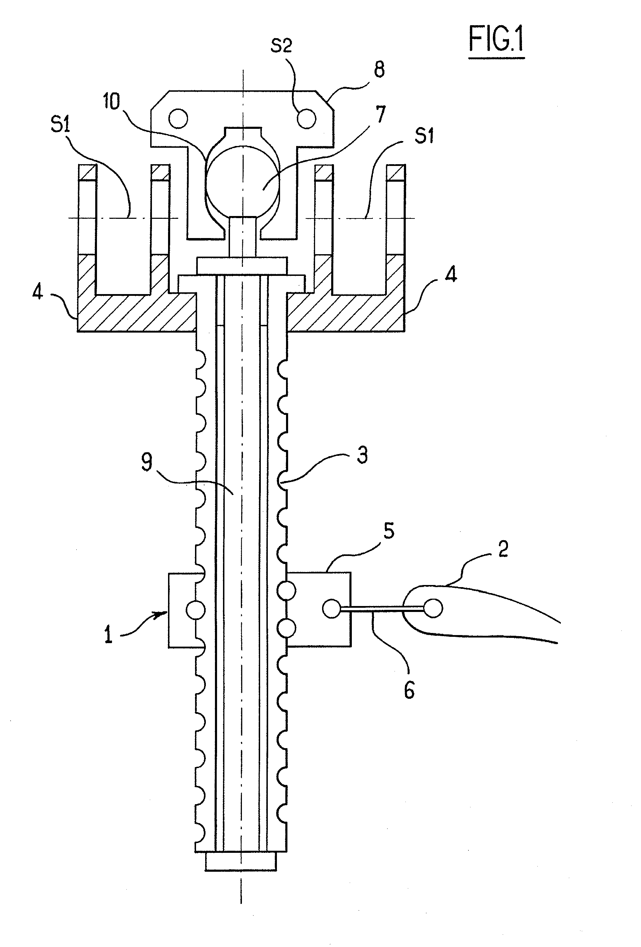

On a représenté schématiquement sur la figure 1 un actionneur 1 de commande de vol avec une voie primaire et une voie secondaire.

Cet actionneur 1 est par exemple un vérin de type THSA, pour la commande d'un plan 2 horizontal variable d'aéronef.

Il comporte une voie primaire qui comprend une vis creuse 3 reliée à une extrémité, par un système à cardan 4, à la structure S1 de l'avion. La voie primaire comprend également un écrou 5, qui coopère avec la vis 3 en étant monté sur celle-ci et qui est relié au plan 2 à commander, par exemple par un autre système à cardan 6.

Une tige de sécurité 9 s'étend à l'intérieur de la vis creuse 3. Cette tige 9 se termine par une tête 7 sphérique placée avec jeu à l'intérieur d'une forme sphérique femelle 10 d'une pièce d'attache 8 de la voie secondaire, cette pièce d'attache 8 étant elle-même fixée à une structure S2 de l'avion.

Cet actionneur est par exemple commandé par un moteur hydraulique ou électrique M, qui entraîne la vis 3 en rotation et déplace l'écrou 5 en translation, ce dernier étant à cet effet bloqué en rotation. Le déplacement en translation de l'écrou 5 permet ainsi de commander le basculement que l'on souhaite donner au plan horizontal variable 2.

### FIXATION DE L'ATTACHE HAUTE SECONDAIRE

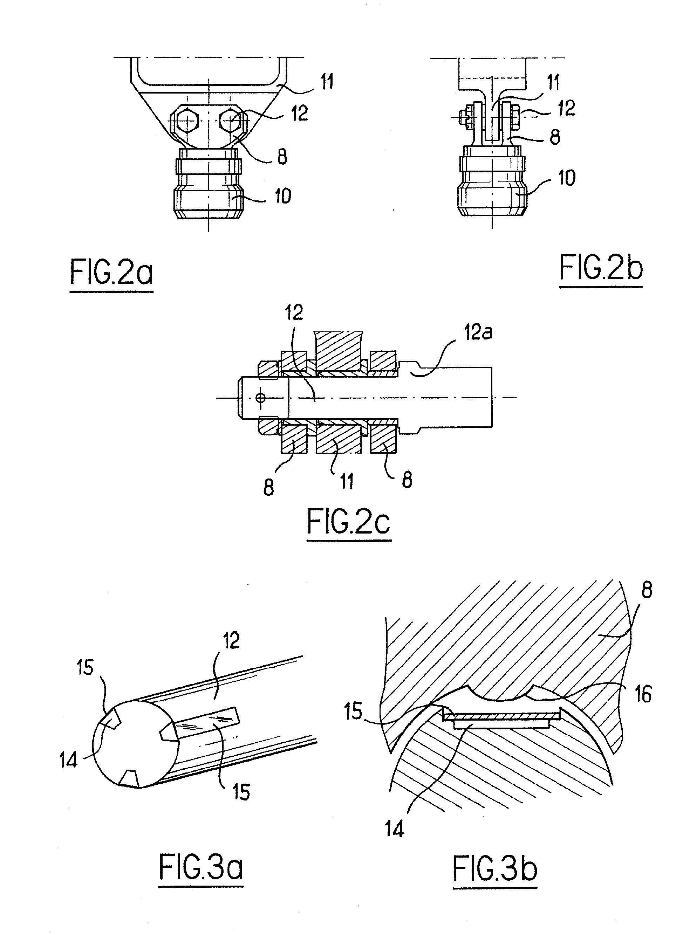

On a représenté sur les figures 2a, 2b et 2c la fixation de la pièce d'attache 8 de la voie secondaire sur une chape 11 supérieure de fixation de la structure S2 de l'avion.

Ainsi qu'on peut le voir sur ces figures, la pièce 8 est un étrier qui comporte deux chapes entre lesquelles est reçue la chape 11. Deux vis 12 parallèles s'étendent à travers les chapes de la pièce 8 et la pièce 11, l'ensemble étant fixé par serrage entre des têtes 12a qui terminent les vis 12 à une extrémité et des écrous 13 dont le filetage coopère avec celui des vis 12 à leurs autres extrémités.

### DETECTION DE LA MISE SOUS CHARGE

Des moyens de détection apte à détecter un effort sont disposés sur au moins l'une des vis 12 ou au moins l'une des deux chapes de la pièce 8 pour détecter la reprise d'effort par la voie secondaire.

Les figures 3a et 3b illustrent une solution dans laquelle l'une des vis 12 présente au droit d'une des chapes de la pièce d'attache 8 plusieurs rainures 14 en creux au niveau desquels s'étendent des lames souples 15 porteuses de jauges de contrainte.

La chape correspondante de la pièce d'attache 8 comporte quant à elle un certain nombre de poinçons 16 en saillie qui, lorsque l'effort est supporté par la voie secondaire et que la pièce d'attache 8, la chape 11 et les vis 12 sont en charge soit en compression, soit en traction, viennent en appui sur la vis et déforment les lames 15 à jauges de contrainte.

Les lames à jauges de contraintes sont par exemple réparties régulièrement sur la périphérie de la vis 12. Elles peuvent être au nombre de deux, réparties de façon diamétralement opposées, c'est-à-dire à 180° l'un de l'autre sur une même périphérie de la vis 12. Elles peuvent également être au nombre de trois (réparties à 120° les unes des autres sur la vis), voire être en un nombre plus important de façon à pouvoir détecter des efforts qui ne seraient pas uniquement des efforts en compression ou traction, mais qui seraient dirigés avec un certain angle par rapport à la direction principale de traction/compression. On notera en particulier qu'une configuration à trois jauges de contrainte ou plus permet de récupérer un signal de mise sous charge quelle que soit la direction dans laquelle cette mise sous charge intervient.

Les poinçons 16 ont quant à eux la même répartition que les lames à jauges de contrainte.

Les lames à jauges de contrainte sont par exemple des membranes souples en feuillard d'acier inoxydable sur lesquelles les jauges de contrainte sont collées ou déposées.

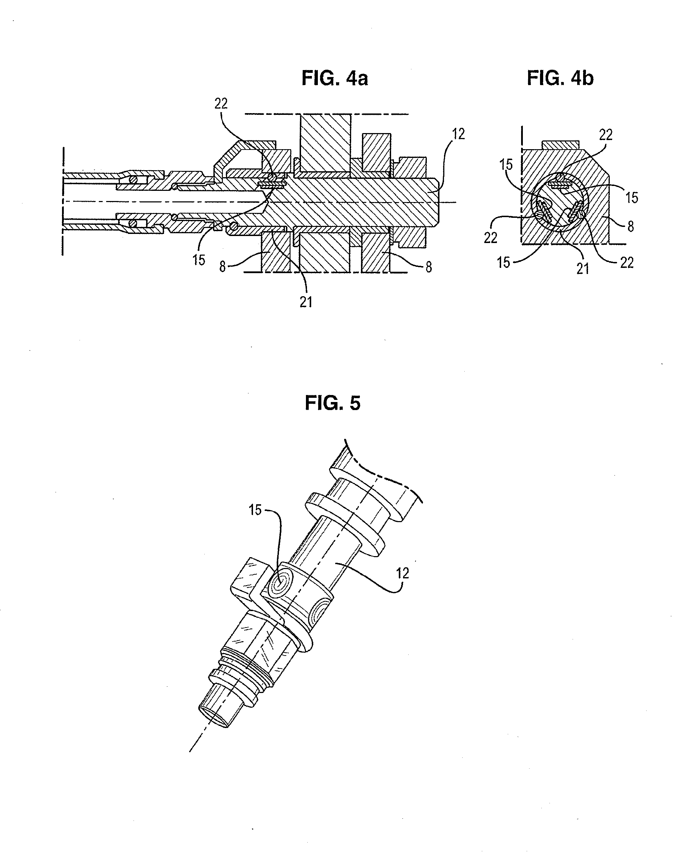

Les figures 4a, 4b et 5 illustrent un exemple dans lequel il est prévu trois jauges 15 de type à membranes réparties à 120° les unes des autres sur une périphérie de la vis 12. Les chapes de la pièce d'attache 8 ne comportent pas de poinçon, mais il est prévu au niveau du trou de la chape, entre la chape et la vis, une bague 21 qui intègre trois billes 22 au droit des membranes qui constituent les jauges 15.

D'autres solutions de détection d'efforts au niveau de l'attache haute secondaire sont envisageables.

Notamment, en variante, les lames à jauges de contrainte peuvent être intégrées non pas à la vis mais à des bagues interposées entre la vis et les chapes et/ou l'écrou.

Une alternative encore consiste en ce que les membranes comportent un élément en saillie apte à être mis en contact par la chape pour une ou plusieurs des membranes au moins dans certaines configurations de mise sous charge.

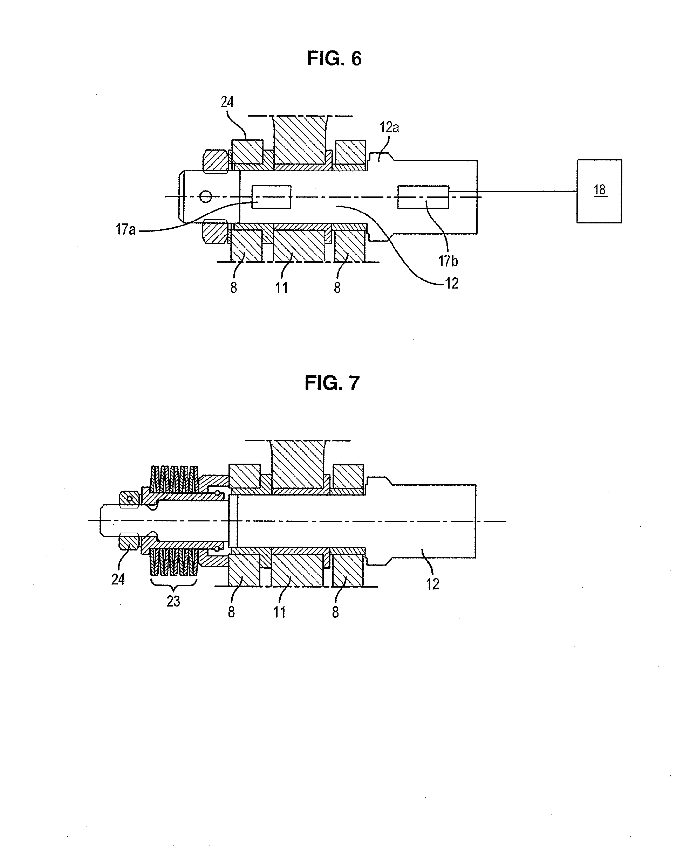

La figure 6 illustre un mode de réalisation d'un moyen de détection d'effort selon l'invention.

Deux lames piézo-électriques 17a, 17b sont positionnées sur l'une des vis 12. La lame 17a est utilisée pour exciter la vis 12 en la faisant vibrer autour de sa ou ses fréquences de résonance. La lame 17b joue le rôle de transducteur et relève les vibrations de la vis 12.

On comprend que selon que l'attache haute de la voie secondaire est ou non en charge, la réponse en vibration, et notamment la fréquence de résonnance de la vis 12, change.

Un traitement de la réponse en fréquence telle que mesurée par la lame 17b, mettant en oeuvre par exemple des filtrages autour des fréquences de résonance de la vis 12 selon qu'elle est ou non en charge, permet de détecter la mise en charge ou non de la voie secondaire.

Ce traitement est par exemple mis en oeuvre par un calculateur 18 qui pourra également tenir compte d'autres paramètres externes pour ajuster ces filtrages : température notamment.

Ce calculateur 18 est lui-même relié à un élément de type interrupteur qu'il bascule pour mettre en circuit ouvert ou à la masse le circuit de détection de défaillance de commande de vol de l'aéronef.

En variante, les lames piézo-électriques 17a, 17b peuvent être intégrées non pas à la vis mais à des bagues interposées entre la vis et les chapes et/ou l'écrou.

Elles peuvent également être disposées sur d'autres pièces participant à l'attache haute de la voie secondaire : pièce d'attache 8 ou chape 11 par exemple.

On notera que des solution à jauges de contrainte du type de celles qui viennent d'être décrites ont l'avantage de permettre de ne pas affaiblir le montage de fixation de l'attache haute secondaire - lequel doit être capable de supporter des efforts de une à plusieurs dizaines de Tonnes, tout en permettant la détection d'efforts de l'ordre de une à plusieurs dizaines de Kg.

Par ailleurs, en complément des différentes variantes qui viennent d'être décrites et ainsi qu'illustré sur la figure 7, on interpose avantageusement entre l'écrou 24 associé à la vis 12 et la chape de la pièce 8 qu'il vient serrer un ensemble (ou boitier) ressort 23. Ce boitier ressort 23 permet de répartir l'effort de serrage et rend indépendant la mise sous charge des jauges de l'effort couple de serrage appliqué à la vis lors du montage. On évite ainsi des fausses détections dues aux conditions de montage.

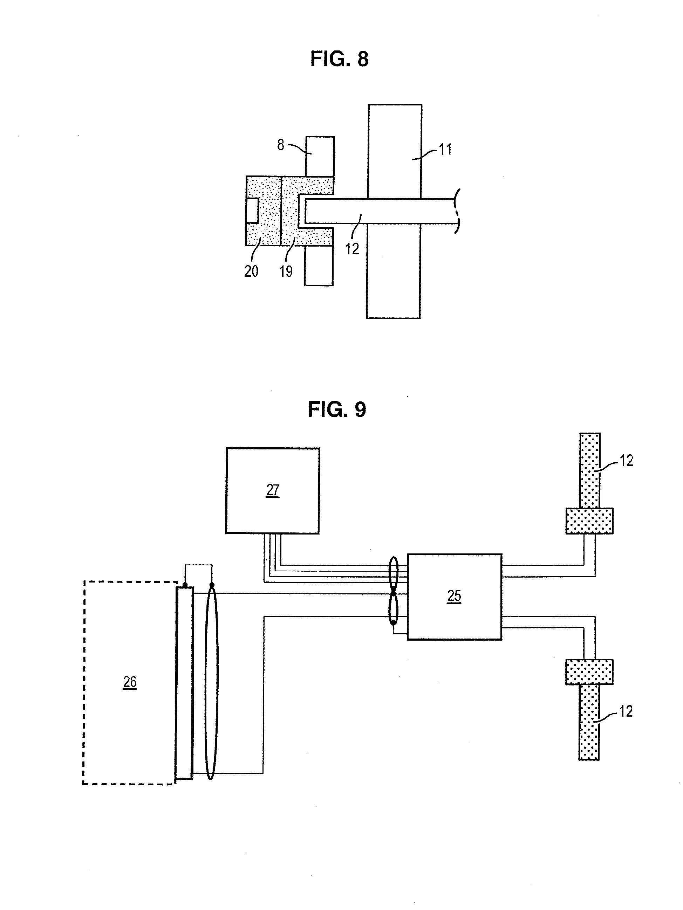

Ainsi qu'illustré sur la figure 8, on peut prévoir d'équiper l'une des chapes de la pièce d'attache 8 d'une bague 19 constituée par une enveloppe remplie de silicone et intégrant un ou plusieurs capteurs de pression 20, par exemple du type à pont de silicium.

Lors de la mise en charge de la voie secondaire, la vis 12 supportant l'effort mettra en charge la bague 19. Le changement de pression sera alors détecté par le capteur 20 équipant la bague 19.

Egalement, on peut envisager d'équiper soit une seule vis, soit les deux vis 12, soit encore la chape 11 ou la pièce d'attache 8, et de façon plus générale de multiplier les différentes mesures réalisées par différents moyens de détection, de façon à disposer d'un système redondant et le cas échéant travailler en différentiel.

La figure 9 explicite quant à elle un montage possible avec deux vis de fixation 12 équipées de capteurs du type de celles proposées dans les figures précédentes.

Dans ce montage, les capteurs des vis 12 sont reliés à un boitier électronique 25 (qui intègre par exemple le calculateur 18 évoqué précédemment en référence à la figure 6). Ce boitier électronique 25 reçoit une alimentation électrique d'une source 26. Il met en oeuvre un premier traitement sur les mesures des capteurs et renvoie des informations, par exemple numériques, à un calculateur 27 de l'aéronef.

Ce boitier 25 peut par exemple mettre en oeuvre sur les signaux qu'il reçoit des capteurs d'effort des deux vis, des tests de cohérence qualitative ou quantitative.

Comme on l'aura compris, les solutions qui viennent d'être décrites ont l'avantage d'être simple et d'une grande fiabilité.

En outre, la détection grâce à des capteurs apte à détecter un effort sur les vis de fixation ou des bagues associées a l'avantage d'être d'une grande facilité d'implémentation.

Elle peut notamment être mise en place sur des actionneurs existants, sans nécessiter de modifications substantielles sur ceux-ci.

On notera enfin que s'agissant des solutions où les jauges sont portées par des vis de fixation, celles-ci ont le grand avantage d'être faciles à mettre en place sur des actionneurs déjà en service, notamment dans le cadre d'un réfrofit, puisqu'il suffit pour cela de remplacer les vis de fixation de l'actionneur par des vis équipées de jauges.

L'invention consiste dans la détection de la reprise d'effort par la voie secondaire d'un actionneur de commande de vol, notamment d'un actionneur THSA.

Toutefois l'utilisation de vis équipées du type de celles qui viennent d'être décrites, trouvent avantageusement application plus largement dans le cadre de la détection d'effort sur toute fixation d'attache.

## Revendications

1. Ensemble de détection dans un aéronef comprenant :
- un actionneur (1) de commande de vol présentant une voie primaire et une voie secondaire apte à reprendre l'effort de la voie primaire en cas de défaillance de celle-ci, la voie primaire comportant une vis (3), la voie secondaire comportant une tige (9) de sécurité de reprise d'effort traversant la vis,
une pièce d'attache de la voie primaire terminant la vis (3) de celle-ci,
une pièce d'attache (8) de la voie secondaire dont une forme femelle (10) reçoit, avec jeu lorsque la voie primaire porte l'effort, une forme mâle (7) qui termine la tige de sécurité de reprise d'effort, la forme mâle (7) qui termine la tige (9) et la forme femelle (10) de la pièce d'attache (8) de la voie secondaire étant sphériques ou de révolution,
- une chape (11) de fixation de l'aéronef appartenant à la structure (S2) de l'aéronef,
- des moyens de fixation (12) de la pièce d'attache (8) de la voie secondaire à ladite chape (11) de fixation,
la pièce d'attache (8) de la voie secondaire, la chape (11) de fixation et les moyens de fixation (12) réalisant l'attache haute de la voie secondaire,
- des moyens de détection de mise sous charge de la voie secondaire de l'actionneur de commande de vol lors d'une rupture de la voie primaire,
ledit ensemble étant **caractérisé en ce que** lesdits moyens de détection de mise sous charge de la voie secondaire de l'actionneur de commande de vol comprennent des moyens (17a) pour exciter en vibration au moins une pièce (8,11,12) de l'attache haute de la voie secondaire, des moyens (17b) pour relever les vibrations ainsi générées sur cette pièce et des moyens de traitement pour détecter un changement de la réponse en fréquence de la pièce excitée.

2. Ensemble selon la revendication 1, **caractérisé en ce que** les moyens d'excitation (17a) et les moyens (17b) pour relever les vibrations sont de type piézo-électriques.

3. Ensemble selon l'une des revendications 1 ou 2, **caractérisé en ce que** les moyens de traitement sont aptes à mettre en oeuvre un filtrage autour d'au moins une fréquence de résonance de la pièce excitée.

4. Ensemble selon l'une des revendications 1 à 3, **caractérisé en ce que** les moyens (17a) pour exciter en vibration et les moyens (17b) pour relever les vibrations sont rapportés sur la pièce d'attache (8) de la voie secondaire.

5. Ensemble selon l'une des revendications 1 à 4, **caractérisé en ce que** les moyens (17a) pour exciter en vibration et les moyens (17b) pour relever les vibrations sont rapportés sur la chape de fixation (11) de l'aéronef.

6. Ensemble selon l'une des revendications 1 à 5, dans lequel, les moyens de fixation comprenant au moins une vis de fixation (12), les moyens (17a) pour exciter en vibration et les moyens (17b) pour relever les vibrations sont rapportés sur ladite vis de fixation (12) et/ou sur une bague rapportée sur celle-ci.

7. Ensemble selon l'une des revendications 1 à 6, **caractérisé en ce qu'**il comporte plusieurs moyens de détection de mise sous charge de la voie secondaire disposés sur une ou plusieurs des pièces assurant la fixation de l'attache haute de la voie secondaire pour assurer des mesures redondantes ou complémentaires.

8. Utilisation d'une vis de fixation (12) pour la détection de la mise sous charge de la voie secondaire d'un actionneur de commande de vol, comportant des moyens (17a) pour exciter en vibration ladite vis (12), des moyens (17b) pour relever les vibrations ainsi générées sur ladite vis (12), l'actionneur comprenant des moyens de traitement pour détecter un changement de la réponse en fréquence de la vis,
ladite vis étant substituée à une vis de fixation d'une pièce d'attache de la voie secondaire de l'actionneur de commande de vol.

## Patentansprüche

1. Erfassungsbaugruppe in einem Flugzeug, aufweisend:
- ein Flugsteuerungsstellglied (1), aufweisend
einen Primärweg und einen Sekundärweg, der den Druck des Primärwegs für den Fall eines Bruchs desselben aufnehmen kann, wobei der Primärweg eine Schraube (3) umfasst und der Sekundärweg eine Sicherheitsstange (9) zum Aufnehmen eines Drucks umfasst, der durch die Schraube verläuft,
ein Befestigungselement des Primärwegs, das die Schraube (3) desselben terminiert,
ein Befestigungselement (8) des Sekundärwegs, von dem eine Aufnahmeform (10) mit Spiel, wenn der Primärweg den Druck trägt, eine Einsteckform (7) aufnimmt, die die Sicherheitsstange zum Aufnehmen des Drucks terminiert, wobei die Einsteckform (7), die die Stange (9) terminiert, und die Aufnahmeform (10) des Befestigungselements (8) des Sekundärwegs kugelförmig oder drehsymmetrisch sind,
- ein Befestigungsjoch (11) des Flugzeugs, das Teil der Struktur (S2) des Flugzeugs ist,
- Mittel (12) zum Befestigen des Befestigungselements (8) des Sekundärwegs am Befestigungsjoch (11),
wobei das Befestigungselement (8) des Sekundärwegs, das Befestigungsjoch (11) und
das Befestigungsmittel (12) für die obere Befestigung des Sekundärwegs sorgen,
- Mittel zur Erfassung des Drucks des Sekundärwegs des Flugsteuerungsstellglieds für den Fall eines Bruchs des Primärwegs, wobei die Baugruppe **dadurch gekennzeichnet ist, dass** das Mittel zur Erfassung des Drucks des Sekundärwegs des Flugsteuerungsstellglieds ein Mittel (17a) zum Erregen von Schwingungen in wenigstens einem Teil (8, 11, 12) der oberen Befestigung des Sekundärwegs, ein Mittel (17b) zum Erfassen der auf diese Weise an diesem Teil erzeugten Schwingungen und ein Verarbeitungsmittel zum Erfassen einer Veränderung der Frequenzantwort des erregten Teils aufweist.

2. Baugruppe nach Anspruch 1, **dadurch gekennzeichnet, dass** das Erregungsmittel (17a) und das Mittel (17b) zum Erfassen der Schwingungen piezoelektrischer Art sind.

3. Baugruppe nach Anspruch 1 oder 2, **dadurch gekennzeichnet, dass** das Verarbeitungsmittel eine Filterung um wenigstens eine Schwingungsfrequenz des erregten Teils implementieren kann.

4. Baugruppe nach einem der Ansprüche 1 bis 3, **dadurch gekennzeichnet, dass** das Mittel (17a) zum Erregen von Schwingungen und das Mittel (17b) zum Erfassen der Schwingungen am dem Befestigungselement (8) des Sekundärwegs angebracht sind.

5. Baugruppe nach einem der Ansprüche 1 bis 4, **dadurch gekennzeichnet, dass** das Mittel (17a) zum Erregen von Schwingungen und das Mittel (17b) zum Erfassen der Schwingungen am Befestigungsjoch (11) des Flugzeugs angebracht sind.

6. Baugruppe nach einem der Ansprüche 1 bis 5, wobei das Befestigungsmittel wenigstens eine Befestigungsschraube (12) aufweist, wobei das Mittel (17a) zum Erregen von Schwingungen und das Mittel (17b) zum Erfassen der Schwingungen an der Befestigungsschraube (12) und/oder an einem Ring angebracht sind, der an dieser angebracht ist.

7. Baugruppe nach einem der Ansprüche 1 bis 6, **dadurch gekennzeichnet, dass** sie mehrere Mittel zum Erfassen des Drucks des Sekundärwegs umfasst, die an einem oder mehreren der Teile angeordnet sind und für das Sichern der oberen Befestigung des Sekundärwegs sorgen, um redundante oder ergänzende Messungen sicherzustellen.

8. Verwendung einer Befestigungsschraube (12) zum Erfassen des Drucks des Sekundärwegs eines Flugsteueurngsstellglieds, umfassend ein Mittel (17a) zum Erregen von Schwingungen in der Schraube (12), ein Mittel (17b) zum Erfassen der auf diese Weise an der Schraube (12) erregten Schwingungen, wobei das Stellglied ein Verarbeitungsmittel zum Erfassen einer Veränderung der Frequenzantwort der Schraube aufweist,
wobei die Schraube eine Befestigungsschraube eines Befestigungselements des Sekundärwegs des Flugsteueurngsstellglieds ersetzt.

## Claims

1. Detection assembly in an aircraft, including:
- a flight control actuator (1) having
a primary path and a secondary path capable of taking up the load of the primary path in the event of the breakdown of the latter, with the primary path comprising a screw (3) and the secondary path comprising a safety rod (9) for taking up a load passing through the screw,
a fastener of the primary path terminating the screw (3) of the latter,
a fastener (8) of the secondary path of which a female shape (10) receives, with play when the primary path bears the load, a male shape (7) which terminates the safety rod for taking up the load, with the male shape (7), which terminates the rod (9), and the female shape (10) of the fastener (8) of the secondary path being spherical or rotationally symmetrical,
- a fastening yoke (11) of the aircraft being part of the structure (S2) of the aircraft,
- means (12) for fastening the fastener (8) of the secondary path to said fastening yoke (11),
the fastener (8) of the secondary path, the fastening yoke (11) and the fastening means (12) producing the upper fastening of the secondary path,
- means for the detection of loading of the secondary path of the flight control actuator in the event of a breakage of the primary path, said assembly being **characterized in that** said means for the detection of loading of the secondary path of the flight control actuator include means (17a) for exciting vibrations in at least one part (8, 11, 12) of the upper fastening of the secondary path, means (17b) for picking up the vibrations thus generated on this part and processing means for detecting a change in the frequency response of the excited part.

2. Assembly according to Claim 1, **characterized in that** the excitation means (17a) and the means (17b) for picking up the vibrations are of the piezoelectric type.

3. Assembly according to either Claim 1 or 2, **characterized in that** the processing means are capable of implementing a filtering around at least one resonance frequency of the excited part.

4. Assembly according to one of Claims 1 to 3, **characterized in that** the means (17a) for exciting vibrations and the means (17b) for picking up the vibrations are mounted to the fastener (8) of the secondary path.

5. Assembly according to one of Claims 1 to 4, **characterized in that** the means (17a) for exciting vibrations and the means (17b) for picking up the vibrations are mounted on the fastening yoke (11) of the aircraft.

6. Assembly according to one of Claims 1 to 5, in which, the fastening means including at least one fastening screw (12), the means (17a) for exciting vibrations, and the means (17b) for picking up the vibrations are mounted on said fastening screw (12) and/or on a ring mounted on the latter.

7. Assembly according to one of Claims 1 to 6, **characterized in that** it comprises several means for detecting the loading of the secondary path, which are arranged on one or more of the parts ensuring the securing of the upper fastening of the secondary path, in order to ensure redundant or complementary measurements.

8. Use of a fastening screw (12) for detecting the loading of the secondary path of a flight control actuator, comprising means (17a) for exciting vibrations in said screw (12), means (17b) for picking up the vibrations thus generated on said screw (12), with the actuator including processing means for detecting a change in the frequency response of the screw,
said screw substituting for a fastening screw of a fastener of the secondary path of the flight control actuator.
